# EUROPÄISCHE PATENTSCHRIFT

(11) **EP 2 710 057 B1**
(45) Veröffentlichungstag und Bekanntmachung des Hinweises auf die Patenterteilung: **11.07.2018**
(21) Anmeldenummer: 12721818.8
(22) Anmeldetag: 14.05.2012
(51) Int. Cl.: C08J 9/32, C08J 9/40, C08J 9/00

(54) **MELAMIN-/FORMALDEHYD-SCHAUMSTOFF ENTHALTEND MIKROHOHLKUGELN**
MELAMINE-FORMALDEHYDE FOAM COMPRISING HOLLOW MICROSPHERES
MATIÈRE EXPANSÉE EN MÉLAMINE/FORMALDÉHYDE CONTENANT DES MICROSPHÈRES CREUSES

(30) Priorität: 16.05.2011 EP 11166152
(43) Veröffentlichungstag der Anmeldung: 26.03.2014
(73) Patentinhaber: BASF SE, 67056 Ludwigshafen am Rhein (DE)
(72) Erfinder: STEINKE, Tobias, Heinz, 67346 Speyer (DE); NESSEL, Peter, 67067 Ludwigshafen (DE); HAHN, Klaus, 67281 Kirchheim (DE); BAUMGARTL, Horst, 67063 Ludwigshafen (DE); MÖCK, Christof, 68259 Mannheim (DE); VATH, Bernhard, 68259 Mannheim (DE); WESTER, Bettina, 67133 Maxdorf (DE); SCHIERHOLZ, Jens-Uwe, 64625 Bensheim (DE); PUNG, Dave, Ohio 45140 (US)
(74) Vertreter: BASF IP Association
(86) Internationale Anmeldenummer: PCT/EP2012/058862
(87) Internationale Veröffentlichungsnummer: WO 2012/156345

(56) Entgegenhaltungen:
- WO-A1-02/31032
- WO-A1-2008/116763
- US-A- 5 916 927

## Beschreibung

Die vorliegende Erfindung betrifft Melamin-/Formaldehyd-Schaumstoffe enthaltend Mikrohohlkugeln.

Aus der EP-A-17 672 und EP-37 470 sind bereits Schaumstoffe auf Basis von Melamin/Formaldehyd-Kondensationsprodukten sowie ein Verfahren zu ihrer Herstellung bekannt.

Es ist auch bekannt, solche Schaumstoffe mit Mikrohohlkugeln auszurüsten. Die Mikrohohlkugeln können in ihrem Inneren Wirk- oder Effektstoffe enthalten, beispielsweise Stoffe, die als Latentwärmespeicher fungieren und so die Wärmedämmeigenschaften der Melamin-/Formaldehyd-Schaumstoffe verbessern, oder auch Duftstoffe oder biozid wirkende Stoffe, die nach Zerstörung der Mikrohohlkugelwände freigesetzt werden und ihre spezifische Wirkung für die jeweils gewünschte Anwendung entfalten. Ebenso ist eine Hydrophobierung der Schaumstruktur durch Verkapselung und anschließender Freisetzung von hydrophoben Stoffen, beispielsweise Silikonölen, möglich.

In der Europäische Patentanmeldung EP 10152499.9 (Aktenzeichen) werden beispielsweise Melamin/Formaldehyd-Schaumstoffe beschrieben, die Mikrokapseln mit einem mittleren Teilchendurchmesser von 0,5 - 100 µm enthalten. Die Mikrokapseln sind dabei bevorzugt in die Knotenpunkte oder Stege der Schaumstruktur eingebaut.

In der Europäische Patentanmeldung EP 09176634.5 (Aktenzeichen) werden Melamin/Formaldehyd-Schaumstoffe beschrieben, die expandierte Mikrohohlkugeln mit einem mittleren Teilchendurchmesser von 70 - 250 µm enthalten. Die Mikrohohlkugeln sind dabei bevorzugt in die Poren der Schaumstruktur eingebaut. Der Einbau in die Poren wird durch ein mehrstufiges Herstellverfahren erreicht, bei dem in einem ersten Schritt der Melamin/Formaldehyd-Schaumstoff hergestellt und in einem zweiten zusätzlichen Imprägnierschritt die Mikrohohlkugeln in den Schaumstoff eingebracht werden.

Ein Einbau in die Knotenpunkte oder Stege der Schaumstruktur kann aber insbesondere bei hohen Beladungen mit Mikrohohlkugeln mit einer Beeinträchtigung des Schäumvorgangs bzw. der mechanischen Eigenschaften des Schaums verbunden sein. Ein nachträgliches Imprägnieren des Schaums ist zum einen ein zusätzlich notwendiger Verfahrensschritt, zum anderen ist das Einbringen und Fixieren der Mikrohohlkugeln an den Schaum mit zunehmender Beladung schwierig.

US 5 961 927 A offenbart Verfahren zur Herstellung eines Phenolharzschaums enthaltend keramische Mikrohohlpartikel mit vergleichsweise hoher Dichte, geringer Wasseraufnahme und einer hohen mechanischen Festigkeit. In diesen Schäumen bestehen direkte Kontaktestellen zwischen den einzelnen Hohlpartikeln, an den Kontaktstellen wirkt der Phenolharzschaum als Binder. Schäume mit vergleichsweise geringer Dichte sowie hoher Elastizität und hoher Wasseraufnahme sind nach den genannten Verfahren nicht herstellbar.

Die WO 2002/031032 A1 offenbart syntaktische Aminoplastschäume hoher Flammfestigkeit und Hydrolyseresistenz, bestehend aus kugelförmigen Mikrohohlpartikeln mit einer Membran aus Aminoplasten, wobei die Mikrohohlpartikel mit einer Klebstoffschicht verklebt sind. Eine für viele Anwendungen nötige hohe mechanische Festigkeit ist mit der so gebildeten Schaumstruktur nicht erreichbar.

WO 2008/116763 A1 offenbart modifizierte Polyurethanschaumstoffe, enthaltend mikroverkapseltes Latentwärmespeichermaterial. Die Mikrokapseln werden laut dieser Schrift durch eine nachträgliche Imprägnierung des Schaumstoffs mit einer Dispersion enthaltend die Mikrokapseln in die offenzelligen Poren des Schaumstoffs eingebracht. Solche Schäume haben den Nachteil, daß ein zusätzlicher Verfahrensschritt zu ihrer Herstellung nötig ist und eine Fixierung der Hohlkugeln im Schaum oftmals nicht ausreichend erzielt wird.

Der vorliegenden Erfindung lag daher die Aufgabe zugrunde, mit Mikrohohlkugeln versehene Melamin/Formaldehyd-Schaumstoffe zur Verfügung zu stellen, mit denen auch bei großen Beladungen, d.h. Mikrohohlkugelgehalten und ggf. damit verbundenen Wirk- und Effektstoffgehalten, die guten mechanischen Eigenschaften des Schaumstoffs im wesentlichen erhalten bleiben, eine bessere Fixierung der Mikrohohlkugeln im Schaumstoff erzielt wird und die in einfachen Verfahren ohne zusätzlichen Herstellschritt erhältlich sind.

Demgemäß wurden neue Melamin-/Formaldehyd-Schaumstoffe enthaltend Mikrohohlkugeln gefunden, wobei erfindungswesentlich ist, daß die Mikrohohlkugeln in die offenzelligen Poren der Schaumstruktur eingebettet sind und einen mittleren Teilchendurchmesser (D₅₀, volumengemittelt, Malvern, Fraunhoferbeugung) im Bereich von 260 µm bis 490 µm aufweisen. Ferner wurden Verfahren zur Herstellung dieser Melamin-/Formaldehyd-Schaumstoffe sowie deren Verwendungen gefunden.

Die erfindungsgemäßen Melamin-/Formaldehyd-Schaumstoffe weisen insbesondere auch bei großen Beladungen, d.h. Mikrohohlkugelgehalten und ggf. damit verbundenen Wirk- und Effektstoffgehalten, gute mechanische Eigenschaften des Schaumstoffs und eine bessere Fixierung der Mikrohohlkugeln im Schaumstoff auf. Ferner können die Mikrohohlkugeln ohne zusätzlichen Verfahrensschritt bei der Schaumstoffherstellung in den Schaumstoff eingebracht werden.

Die erfindungsgemäßen Gegenstände, Verfahren und Verwendungen werden im folgenden beschrieben.

Sowohl Melamin-/Formaldehyd-Schaumstoffe als solche und deren Herstellung, als auch Mikrohohlkugeln als solche und deren Herstellung sind dem Fachmann bekannt und in der Literatur beschrieben (siehe beispielsweise die eingangs genannten Schriften).

Die erfindungsgemäßen Melamin-/Formaldehyd-Schaumstoffe enthalten Mikrohohlkugeln, wobei wesentlich ist, dass der mittlere Teilchendurchmesser (D₅₀, volumengemittelt, Malvern, Fraunhoferbeugung) der Mikrohohlkugeln im Bereich von 260 µm bis 490 µm, bevorzugt im Bereich von 280 µm bis 450 µm, besonders bevorzugt im Bereich von 300 µm bis 400 µm, liegt.

Der Gehalt an Mikrohohlkugeln liegt in der Regel im Bereich von 0,1 bis 60 Gew.-%, bevorzugt von 5 bis 50 Gew.-%, besonders bevorzugt 10 bis 30 Gew.-%, wobei die Gew.-% jeweils auf das Gesamtgewicht aus zur Schaumstoffherstellung eingesetztem Melamin-/Formaldehyd-Vorkondensat und Mikrohohlkugeln bezogen sind.

Die Melamin-/Formaldehyd-Schaumstoffe besitzen ein offenzelliges Schaumstoffgerüst, welches eine Vielzahl miteinander verbundener, dreidimensional verzweigter Stege enthält (wobei die Verbindungsstellen der Stege untereinander als "Knoten" oder "Knotenpunkte" bezeichnet werden). Der erfindungswesentliche mittlere Teilchendurchmesser der Mikrohohlkugeln und das im folgenden noch beschriebene Herstellverfahren der erfindungsgemäßen Melamin/Formaldehyd-Schaumstoffe bewirken, dass die Mikrohohlkugeln in die offenzelligen Poren der Schaumstruktur eingebettet werden. Ein Einbau in die Stege oder Knoten des Schaumstoffgerüsts findet nicht oder in nicht wesentlichem Umfang statt. Dadurch wird auch bei hohen Gehalten an Mikrohohlkugeln eine gute Fixierung der Mikrohohlkugeln im Schaum erreicht, ohne dass die mechanischen Eigenschaften des Schaumstoffs übermäßig beeinflusst werden.

Die erfindungsgemäßen Melamin-/Formaldehyd-Schaumstoffe enthaltend Mikrohohlkugeln können bevorzugt nach den aufeinanderfolgenden Verfahrensschritten a) und b) hergestellt werden:
a) Erwärmen unter Aufschäumen und Vernetzen einer Mischung, enthaltend ein Melamin/Formaldehyd-Vorkondensat mit einem Molverhältnis von Melamin:Formaldehyd im Bereich von üblicherweise 1:1,3 bis 1:5, bevorzugt 1:1,5 bis 1:3,5 auf., die Mikrohohlkugeln, einen Härter, ein Dispergiermittel und ein Treibmittel, und
b) Trocknen des in Verfahrensschritt a) erhaltenen Schaumstoffs,
wobei diese Verfahrensschritte sowie die in Verfahrensschritt a) einsetzbaren Melamin/Formaldehyd-Vorkondensate, Härter, Dispergiermittel und Treibmittel dem Fachmann grundsätzlich bekannt und in der Literatur beschrieben sind (siehe beispielsweise die eingangs zitierten Schriften).

Das Melamin/Formaldehyd-Vorkondensat kann neben Melamin und Formaldehyd bis zu 50 Gew.-%, vorzugsweise bis 20 Gew.-%, (jeweils bezogen auf das Gewicht einkondensierten Melamins) anderer Duroplastbildner und bis zu 50 Gew.-%, vorzugsweise bis zu 20 Gew.-%, (jeweils bezogen auf das Gewicht einkondensierten Formaldehyds) anderer Aldehyde einkondensiert enthalten. Als Duroplastbildner kommen beispielsweise in Frage: alkyl- und aryl-alkylsubstituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate. Als andere Aldehyde können z.B. Acetaldehyd, Trimethylolacetaldehyd, Acrolein, Benzaldehyd, Furfurol, Glyoxal, Glutaraldehyd, Phthalaldehyd und Terephthalaldehyd eingesetzt werden. Besonders bevorzugt ist ein unmodifiziertes Melamin/Formaldehyd-Vorkondensat, d.h. eines, welches keine anderen Duroplastbildner oder andere Aldehyde enthält. Weitere Einzelheiten über Melamin/Formaldehyd-Kondensationsprodukte finden sich in Houben-Weyl, Methoden der organischen Chemie, Band 14/2, 1963, Seiten 319 bis 402.

Kommerziell verfügbare Melamin/Formaldehyd-Vorkondensate sind für eine Vielzahl von Anwendungsgebieten, beispielsweise für die Weiterverarbeitung zu Leimen, einsetzbar. Für einige dieser Anwendungsgebiete ist es vorteilhaft, sulfitgruppenhaltige Melamin/Formaldehyd-Vorkondensate einzusetzen. Solche sulfitgruppenhaltige Melamin/Formaldehyd-Vorkondensate sind beispielsweise nach EP-B 37470 erhältlich, nach der durch Zusatz von 1 bis 20 Gew.-% Natriumdisulfits bei der Kondensation von Melamin und Formaldehyd einkondensierte Sulfitgruppen erhalten werden. Für die erfindungsgemäßen Verfahren ist es aber vorteilhaft, daß im Verfahrensschritt a) ein Vorkondensat eingesetzt wird, welches sulfitgruppenfrei ist.

Zur Emulgierung des Treibmittels und zur Stabilisierung des Schaumes im Verfahrensschritt a) ist der Zusatz eines Dispergiermittels, beispielsweise eines Emulgators oder eines Emulgatorgemisches, erforderlich. Als Emulgatoren können anionische, kationische und nichtionische Tenside sowie deren Gemische verwendet werden.

Geeignete anionische Tenside sind Diphenylenoxidsulfonate, Alkan- und Alkylbenzolsulfonate, Alkylnaphthalinsulfonate, Olefinsulfonate, Alkylethersulfonate, Fettalkoholsulfate, Ethersulfate, alpha-Sulfofettsäureester, Acylaminoalkansulfonate, Acylisethionate, Alkylethercarboxylate, N-Acylsarcosinate, Alkyl- und Alkyletherphosphate. Als nichtionische Tenside können Alkylphenolpolyglykolether, Fettalkoholpolyglykolether, Fettsäurepolyglykolether, Fettsäurealkanolamide, EO/PO-Blockcopolymere, Aminoxide, Glycerinfettsäureester, Sorbitanester und Alkylpolyglucoside verwendet werden. Als kationische Emulgatoren kommen Alkyltriammoniumsalze, Alkylbenzyldimethyl-ammoniumsalze und Alkylpyridiniumsalze zum Einsatz. Die Emulgatoren werden vorzugsweise in Mengen von 0,2 bis 5 Gew.-%, bezogen auf das Melamin/Formaldehyd-Vorkondensat, zugesetzt.

Um aus dem Melamin/Formaldehyd-Vorkondensat, welches bevorzugt in Form einer wäßrigen Lösung oder Dispersion eingesetzt wird, im Verfahrensschritt a) einen Schaum zu erzeugen, muss dieses ein Treibmittel enthalten, wobei sich die Menge nach der erwünschten Dichte des Schaumstoffs richtet. Prinzipiell können bei dem erfindungsgemäßen Verfahren sowohl physikalische als auch chemische Treibmittel angewandt werden. Als physikalische Treibmittel bieten sich z.B. an: Kohlenwasserstoffe, halogenierte, insbesondere fluorierte Kohlenwasserstoffe, Alkohole, Äther, Ketone und Ester in flüssiger Form oder Luft und CO₂ als Gase. Als chemische Treibmittel kommen z.B. Isocyanate in Gemisch mit Wasser in Frage, wobei als wirksames Treibmittel CO₂ freigesetzt wird, ferner Carbonate und Bicarbonate im Gemisch mit Säuren, die ebenfalls CO₂ erzeugen, sowie Azoverbindungen, wie Azodicarbonamid. Bei einer bevorzugten Ausführungsform der Erfindung wird der wässrigen Lösung bzw. Dispersion des Melamin/Formaldehyd-Vorkondensats zwischen 1 und 40 Gew.-%, bezogen auf das Melamin/Formaldehyd-Vorkondensat, eines physikalischen Treibmittels mit einem Siedepunkt zwischen 0 und 80°C zugesetzt; bei Pentan sind es vorzugsweise 5 bis 15 Gew.-%.

Als Härter werden im Verfahrensschritt a) acide Verbindungen eingesetzt, die die Weiterkondensation des Melamin/Formaldehyd-Vorkondensat katalysieren. Die Mengen liegen zwischen 0,01 und 20 Gew.-%, vorzugsweise zwischen 0,05 und 5 Gew.-%, bezogen auf das Melamin/Formaldehyd-Vorkondensat. In Frage kommen anorganische und organische Säuren, z.B. Salzsäure, Schwefelsäure, Phosphorsäure, Salpetersäure, Ameisensäure, Essigsäure, Oxalsäure, Toluolsulfonsäuren, Amidosulfonsäuren sowie Säureanhydride.

Die wässrige Lösung bzw. Dispersion des in Verfahrensschritt a) eingesetzten Melamin/Formaldehyd-Vorkondensats ist vorzugsweise frei von weiteren Zusatzstoffen. Für manche Zwecke kann es jedoch günstig sein, bis zu 20 Gew.-%, vorzugsweise weniger als 10 Gew.-%, bezogen auf das Melamin/Formaldehyd-Vorkondensat, üblicher Zusatzstoffe, wie Farbstoffe, Flammschutzmittel, UV-Stabilisatoren, Mittel zur Herabsetzung der Brandgastoxizität oder zur Förderung der Verkohlung zuzusetzen. Da die Schaumstoffe im allgemeinen offenporig sind und Wasser aufnehmen können, kann es für manche Anwendungszwecke notwendig sein, Hydrophobierungsmittel in Mengen von 0,2 bis 5 Gew.-% zuzusetzen. In Frage kommen dabei z.B. Silikone, Paraffine, Silikon- und Fluortenside, hydrophobe Kohlenwasserstofftenside, Silikon- und Fluorcarbonemulsionen.

Die Konzentration des Melamin/Formaldehyd-Vorkondensates in der Mischung aus Vorkondensat und Lösungs- bzw. Dispergiermittel, insbesondere Wasser, kann in weiten Grenzen zwischen 55 und 85 Gew.-%, vorzugsweise zwischen 63 und 80 Gew.-%, jeweils bezogen auf das Gesamtgewicht aus Melamin/Formaldehyd-Vorkondensat und Lösungs- bzw. Dispergiermittel, schwanken. Die bevorzugte Viskosität der Mischung aus Vorkondensat und Lösungs- bzw. Dispergiermittel liegt zwischen 1 und 3000 dPa s, vorzugsweise zwischen 5 und 2000 dPa s.

Die Mikrohohlkugeln und weiteren Mischungskomponenten werden mit der wässrigen Lösung oder Dispersion des Melamin/Formaldehyd-Vorkondensats homogen vermischt, wobei das Treibmittel ggf. auch unter Druck eingepresst werden kann. Man kann jedoch auch von einem festen, z.B. sprühgetrockneten Melamin/Formaldehyd-Vorkondensat ausgehen und dieses dann mit einer Dispersion der Mikrohohlkugeln und/oder einer wässrigen Lösung des Emulgators, dem Härter sowie dem Treibmittel vermischen. Nach dem Vermischen wird die erhitzte Harzmischung mit dem dispergierten Treibmittel durch eine Düse ausgetragen und schäumt anschließend auf.

Das Aufschäumen der treibmittelhaltigen Lösung oder Dispersion wird nach Austritt aus der Düse - wie in EP-B 17671 beschrieben - durch Heissluft oder Hochfrequenzbestrahlung unterstützt. Bevorzugt kann der Energieeintrag durch elektromagnetische Strahlung erfolgen, beispielsweise durch Hochfrequenzbestrahlung mit 5 bis 400 kW, bevorzugt 5 bis 200 kW, besonders bevorzugt 9 bis 120 kW pro Kilogramm der eingesetzten Mischung in einem Frequenzbereich von 0,2 bis 100 GHz, bevorzugt 0,5 bis 10 GHz. Als Strahlungsquelle für dielektrische Strahlung sind Magnetrone geeignet, wobei mit einem oder mehreren Magnetronen gleichzeitig bestrahlt werden kann.

Die Bestrahlung der zu verschäumenden Mischung erfolgt unmittelbar nachdem sie aus der Schäumdüse ausgetreten ist. Dabei verdampft das Treibmittel, die Harzmischung schäumt auf und härtet gleichzeitig aus.

Die hergestellten Schaumstoffe werden abschließend getrocknet, wobei im Schaumstoff verbliebenes Wasser und Treibmittel entfernt wird.

In einer weiteren Ausführungsformen der erfindungsgemäßen Verfahren kann nach Verfahrensschritt b) ein Verfahrensschritt c) durchgeführt werden, in dem der getrocknete Schaumstoff zur Elastifzierung verpreßt wird.

Der Verfahrensschritt c) ist dem Fachmann grundsätzlich bekannt und in der Literatur, beispielsweise in EP-A 1 505 105 und EP-B 37470, beschrieben.

Die erhaltenen Schaumstoffblöcke bzw. -platten können optional in einem weiteren Verfahrensschritt thermokomprimiert werden. Die Thermokomprimierung als solche ist dem Fachmann bekannt und beispielsweise in WO 2007/031944, EP-A 451 535, EP-A 111 860 und US-B 6,608,118 beschrieben. Durch die Thermokomprimierung kann oftmals eine bessere Fixierung der Mikrohohlkugeln in der Schaumstruktur erreicht werden.

Als bevorzugte Mikrohohlkugeln zur Herstellung der erfindungsgemäßen Melamin/Formaldehyd-Schaumstoffe werden solche eingesetzt, deren Mikrohohlkugelwände aus einem Polymer, einem anorganischen Material oder einer Kombination aus anorganischem Material und Polymer (z.B. durch Verkleben von anorganischen Materialien) bestehen.

Als für die Mikrohohlkugelwände geeignete Polymere sind bevorzugt Polyurethan, Melamin-/Formaldehydharz, Epoxyharz, Polyester, Polycarbonat, Polyacrylate, Polyamide oder deren Mischungen einsetzbar.

Als für die Mikrohohlkugelwände geeignete anorganische Materialien sind bevorzugt Silikate, insbesondere solche des Aluminiums, Calciums, Magnesiums und/oder Zirkons, Oxide wie Aluminiumoxid, Quarz, Magnesit, Mullit, Chromit, Zirkonoxid und/oder Titanoxid, Boride, Carbide und Nitride wie Siliciumcarbid, Titancarbid, Titanborid, Bornitrid und/oder Borcarbid, Kohlenstoff oder Glas geeignet, besonders bevorzugt Glas.

Die Mikrohohlkugelinnenräume können ein Gas, beispielsweise Luft, enthalten oder aber auch evakuiert sein. Bevorzugt sind die Mikrohohlkugelinnenräume zumindest teilweise, insbesondere vollständig, mit einem oder mehreren festen oder flüssigen Wirk- oder Effektstoff gefüllt. Wirk- oder Effektstoffe sind beispielsweise Stoffe, die als Latentwärmespeicher fungieren und so die Wärmedämmeigenschaften der Melamin-/Formaldehyd-Schaumstoffe verbessern können, oder auch Tenside, Detergentien oder Farbstoffe, beispielsweise Tinten, Duftstoffe oder biozid wirkende Stoffe, die nach Zerstörung der Mikrohohlkugelwände freigesetzt werden und ihre spezifische Wirkung für die jeweils gewünschte Anwendung entfalten können. Weitere einsetzbare und dem Fachmann an sich bekannte Wirk- oder Effektstoffe sind beispielsweise Hydrophobierungsmittel, die Haptik bzw. das Anschmutzverhalten beeinflussende Stoffe (beispielsweise zur Erzielung des sogenannten Lotus-Effekts), die Rauchgastoxizität reduzierende Stoffe, Formaldehydfänger, intumeszierende Stoffe, abrasive Stoffe wie z.B. anorganische Nanopartikel (siehe z.B. WO 2009/021963) oder Katalysatoren.

Bevorzugte Mikrohohlkugeln mit Wandmaterial auf Basis eines hochvernetzten Methacrylsäureesterpolymers sind aus der EP-A-1 029 018, DE-A-101 39 171 und WO-A-2005/116559 bekannt. Sie alle betreffen mikroverkapselte Latentwärmespeichermaterialien in unterschiedlichen Anwendungsbereichen. So lehrt die EP-A-1 029 018 die Verwendung in Bindebaustoffen wie Beton oder Gips, die DE-A-101 39 171 die Verwendung von mikroverkapselten Latentwärmespeichermaterialien in Gipskartonplatten und die WO-A-2005/116559 ihren Einsatz in Spanplatten. Alle in diesen Schriften beschriebenen Mikrohohlkugeln haben gemein, dass sie eine hohe Dichtigkeit, sowohl bei thermischer wie auch chemischer Behandlung oder unter Druck aufweisen sollen.

Mikrohohlkugeln lassen sich beispielsweise durch eine sogenannte in-situ-Polymerisation herstellen. Das Prinzip der Mikrohohlkugelbildung basiert darauf, dass man aus den Monomeren, einem Radikalstarter, einem Schutzkolloid und der einzukapselnden lipophilen Substanz eine stabile Öl-in-Wasser-Emulsion herstellt. Anschließend löst man die Polymerisation der Monomeren durch Erwärmung aus und steuert sie gegebenenfalls durch weitere Temperaturerhöhung, wobei die entstehenden Polymere die Hohlkugelwand bilden, weiche die lipophile Substanz umschließt. Dieses allgemeine Prinzip wird beispielsweise in der DE-A-10 2007 055 813, WO2008071649 und DE-A- 101 39 171 beschrieben auf deren Inhalt ausdrücklich Bezug genommen wird.

DE-A-10 2007 055 813 beschreibt die Herstellung und Verwendung von thermisch zerstörbaren Mikrohohlkugeln, welche ebenfalls bevorzugt sind. Die Mikrohohlkugelwand ist aus Acrylaten aufgebaut. Der Mikrohohlkugelinnenraum enthält lipophile Substanzen, wie aliphatische und aromatische Kohlenwasserstoffverbindungen, gesättigte oder ungesättigte C₆-C₃₀-Fettsäuren, Fettalkohole, C₅-C₃₀-Fettamine, Fettsäureester, natürliche und synthetische Wachse, halogenierte Kohlenwasserstoffe, Siliconöle, Klebstoffe, Aromastoffe, Duftstoffe, Wirkstoffe, Farbstoffe, Farbbildner, Pigmente und Vernetzer.

Das Gewichtsverhältnis von Mikrohohlkugelinnenraum zu Mikrohohlkugelwand, das Kern/Wand-Verhältnis, beträgt in der Regel 50:50 bis 95:5, bevorzugt 70:30 bis 95:5, besonders bevorzugt 75:25 bis 93:7.

Die erfindungsgemäß hergestellten Melamin/Formaldehyd-Schaumstoffe weisen in der Regel eine Dichte von 3 bis 100 g/l, besonders bevorzugt 5 bis 50 g/l auf.

Die erfindungsgemäßen Melamin/Formaldehyd-Schaumstoffe enthaltend Mikrohohlkugeln können bei diskontinuierlich, bevorzugt bei kontinuierlicher Arbeitsweise als Platten oder Bahnen in der Regel mit jeder beliebigen Dicke hergestellt werden, zweckmäßigerweise in Schichtdicken von 0,1 bis 500 cm, bevorzugt 0,5 bis 200 cm, besonders bevorzugt 1 bis 100 cm, insbesondere 3 bis 80 cm, ganz besonders bevorzugt 5 bis 50 cm. Formteile aus erfindungsgemäßen Melamin/Formaldehyd-Schaumstoffen können bei kontinuierlicher, bevorzugt bei diskontinuierlicher Arbeitsweise erhalten werden.

Die Melamin/Formaldehyd-Schaumstoffe in Form von Bahnen, Platten, Formteilen oder einer anderen Gestaltung können nach allgemein üblichen Methoden ein-, zwei-, mehr- oder allseitig mit Deckschichten versehen oder kaschiert werden, z.B. mit Papier, Pappe, Glasvlies, Holz, Gipspappe, Metallblechen oder Metallfolien, Kunststoff oder Kunststofffolien, die ggf. auch geschäumt sein können. Die Deckschichten können beim Aufschäumen oder anschließend aufgebracht werden. Beim nachträglichen Aufbringen ist es vorteilhaft einen "Haftvermittler" zu verwenden.

Wenn die erfindungsgemäßen Melamin/Formaldehyd-Schaumstoffe Mikrohohlkugeln enthalten, die mit freizusetzenden Wirk- oder Effektstoffen gefüllt sind, so kann diese Freisetzung zu jedem beliebigen Zeitpunkt durch geeignete mechanische oder thermische Einwirkung auf den Schaumstoff erfolgen. Beispielsweise können die vorstehend beschriebenen Wirk- oder Effektstoffe, wie z.B. Tenside, Detergentien oder Farbstoffe, beispielsweise Tinten, Duft- oder biozid wirkende Stoffe, durch thermische (z.B. Heißluft, verschiedene Strahlungsarten, z.B. Infrarot- oder Mikrowellenstrahlung) oder mechanische Zerstörung (Pressen, Walzen, Ultraschall etc.) der Mikrohohlkugelwände freigesetzt werden. Dadurch kann der Inhalt der Mikrohohlkugeln gleichmäßig oder nahezu gleichmäßig freigesetzt werden und die Oberflächenstruktur (Stege und Knoten) auch im Innern der offenzelligen Melamin/Formaldehyd-Schaumstoffstruktur benetzt werden. Die Verfahren zur thermischen oder mechanischen Zerstörung der Mikrokapselwände sind dem Fachmann grundsätzlich bekannt und in der Literatur beschrieben. Beispielsweise kann der Schaumstoff zur Zerstörung der Mikrokapselwände verpreßt werden, wie z.B. in EP-A 0451535 beschrieben, indem der Schaumstoff durch einen definierten Spalt zwischen zwei gegensinnig rotierenden, parallel ausgerichteten Walzen hindurchgeführt wird. Neben dem Durchführen des Schaumstoffes durch einen Spalt zwischen zwei gleichsinnig rotierenden Walzen ist es auch möglich, dass der Schaumstoff auf einem Förderband transportiert wird und eine Walze, die sich mit der gleichen Umfangsgeschwindigkeit dreht, mit der der Schaumstoff bewegt wird, auf den Schaumstoff presst. Weiterhin kann der Druck auf den Schaumstoff dadurch ausgeübt werden, dass der Schaumstoff zum Beispiel in eine Presse eingelegt wird, in welcher ein Stempel auf den Schaumstoff presst. In diesem Fall ist jedoch ein kontinuierliches Pressen nicht möglich.
Selbstverständlich können die Mikrohohlkugeln auch Wirk- oder Effektstoffe enhalten, deren Wirkung sich auch ohne eine Zerstörung der Mikrokapselwände entfaltet; so werden beispielsweise brandhemmende Substanzen erst im Brandfall aktiv und können ihre Wirkung auch in einer verkapselten Form entfalten.

Die erfindungsgemäßen Melamin/Formaldehyd-Schaumstoffe finden Anwendung zur Schalldämpfung und Wärme- bzw. Kälteisolierung in Gebäuden, im Fahrzeug-, Eisenbahn-, Schiffs- und Flugzeugbau sowie in der Raumfahrt und als Polstermaterial bei der Bepolsterung von Sitzflächen.

Die erfindungsgemäßen Melamin-/Formaldehyd-Schaumstoffe weisen insbesondere auch bei großen Beladungen, d.h. Mikrohohlkugelgehalten und ggf. damit verbundenen Wirk- und Effektstoffgehalten, gute mechanische Eigenschaften des Schaumstoffs und eine bessere Fixierung der Mikrohohlkugeln im Schaumstoff auf. Ferner können die Mikrohohlkugeln ohne zusätzlichen Verfahrensschritt bei der Schaumstoffherstellung in den Schaumstoff eingebracht werden.

Die Erfindung wird anhand der nachfolgenden Beispiele näher erläutert.

### Beispiele

### Meßmethoden:

### Mechanischen Eigenschaften, Elastizität:

Alle Stempeldruckmessungen zur Beurteilung der mechanischen Güte der Melaminharzschaumstoffe erfolgten nach US-A-4 666 948. Dazu wurde ein zylindrischer Stempel mit einem Durchmesser von 8 mm und einer Höhe von 10 cm in eine zylindrische Probe mit dem Durchmesser von 11 cm und einer Höhe von 5 cm in Schäumrichtung bei einem Winkel von 90° gedrückt bis die Probe riß. Die Durchreißkraft [N], im folgenden auch Stempeldruckwert genannt, gibt Auskunft über die Güte des Schaumstoffs.

### Vergleichsbeispiel V-1

Herstellung eines Melamin-/Formaldehyd-Schaumstoffes ohne Mikrohohlkugeln (nach WO-A-2009/021963):
75 Gew.-Teile eines sprühgetrockneten Melamin-/Formaldehyd-Vorkondensates (Molverhältnis 1:3) wurden in 25 Gew.-Teilen Wasser gelöst, 3 Gew.-% Ameisensäure, 2 Gew.-% eines Na-C₁₂/C₁₄-Alkylsulfats, 38 Gew.-% Pentan, wobei die Gew.-% jeweils bezogen sind auf das Gewicht des Vorkondensats, zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Dieser Melamin-/Formaldehyd-Schaumstoff hatte eine Dichte von 7,5 g/l und einen Stempeldruckwert von 18,9 N.

### Beispiel 4 und Vergleichsbeispiele V-2, V-3 und V-5:

Es wurden jeweils 75 Gewichtsteile eines sprühgetrockneten Melamin/Formaldehyd-Vorkondensats (Molverhältnis Melamin : Formaldehyd 1:3) in 25 Gewichtsteilen Wasser gelöst. Dieser Mischung wurden 3 Gewichtsteile Ameisensäure, 2 Gewichtsteile eines Fettalkoholpolyglykolethers als Tensid, 38 Gewichtsteile Pentan und 10 Gew.-% (bezogen auf das Gesamtgewicht des Melamin/Formaldehyd-Vorkondensats) Mikroglashohlkugeln auf Basis von Kalk-Natron-Silikatglas mit den in Tabelle 1 genannten mittleren Teilchendurchmessern (D₅₀, volumengemittelt, Malvern, Fraunhoferbeugung) und Schüttdichten zugesetzt. Diese Mischung wurde kräftig gerührt und anschließend in einer Schäumform aus Polypropylen durch Einstrahlung von Mikrowellenenergie bei 2,54 GHz verschäumt. Anschließend wurden die jeweils gebildeten Schaumstoffe mit Heissluft getrocknet.

Die Eigenschaften der jeweils erhaltenen Melamin/Formaldehyd-Schaumstoffe werden in Tabelle 1 widergegeben.

**Tabelle 1: Menge und Größe der Mikrohohlkugeln und Eigenschaften der Melamin/Formaldehyd-Schaumstoffe**

| Beispiel | V-1 | V-2 | V-3 | 4 | V-5 |
|---|---|---|---|---|---|
| | | | | | |
| Mikrohohlkugel, Menge [Gew.-%] | - | 10 | 10 | 10 | 10 |
| Mikrohohlkugel, mittlerer Teilchendurchmesser (D₅₀, volumengemittelt, Malvern, Fraunhoferbeugung) [µm] | - | 50 | 190 | 360 | 650 |
| Schüttdichte [g/l] | - | 32 | 26 | 20 | 16 |
| | | | | | |

| Eigenschaften | | | | | |
|---|---|---|---|---|---|
| Dichte [g/l] | 7,5 | 7,5 | 7,9 | 7,5 | 6,9 |
| Stempeldruck [N] | 18,9 | 11,2 | 14,6 | 18,5 | 15,1 |

## Patentansprüche

1. Melamin-/Formaldehyd-Schaumstoff enthaltend Mikrohohlkugeln, **dadurch gekennzeichnet, daß** die Mikrohohlkugeln in die offenzelligen Poren der Schaumstruktur eingebettet sind und einen mittleren Teilchendurchmesser (D₅₀, volumengemittelt, Malvern, Fraunhoferbeugung) im Bereich von 260 µm bis 490 µm aufweisen.

2. Melamin-/Formaldehyd-Schaumstoff nach Anspruch 1, **dadurch gekennzeichnet, daß** der Gehalt an Mikrohohlkugeln 0,1 bis 60 Gew.-% beträgt, wobei die Gew.-% auf das Gesamtgewicht aus zur Schaumstoffherstellung eingesetztem Melamin-/Formaldehyd-Vorkondensat und Mikrohohlkugeln bezogen sind.

3. Melamin-/Formaldehyd-Schaumstoffe nach Ansprüchen 1 bis 2, **dadurch gekennzeichnet, dass** die Mikrohohlkugelwände aus einem Polymer oder einem anorganischen Material bestehen.

4. Melamin-/Formaldehyd-Schaumstoffe nach Ansprüchen 1 bis 3, **dadurch gekennzeichnet, dass** die Mikrohohlkugelwände aus Glas bestehen.

5. Melamin-/Formaldehyd-Schaumstoffe nach Ansprüchen 1 bis 4, **dadurch gekennzeichnet, dass** die Mikrohohlkugelinnenräume zumindest teilweise mit einem Wirk- oder Effektstoff gefüllt sind.

6. Verfahren zur Herstellung von Melamin-/Formaldehyd-Schaumstoffen enthaltend Mikrohohlkugeln nach Ansprüchen 1 bis 5, **dadurch gekennzeichnet, dass** die aufeinanderfolgenden Verfahrensschritte a) und b) durchgeführt werden:
a) Erwärmen unter Aufschäumen und Vernetzen einer Mischung, enthaltend ein Melamin/Formaldehyd-Vorkondensat mit einem Molverhältnis von Melamin:Formaldehyd im Bereich von 1:1,3 bis 1:5, Mikrohohlkugeln mit einem mittleren Teilchendurchmesser (D₅₀, volumengemittelt, Malvern, Fraunhoferbeugung) im Bereich von 260 µm bis 490 µm, Härter, Dispergiermittel und Treibmittel, und
b) Trocknen des in Verfahrensschritt a) erhaltenen Schaumstoffs.

7. Verwendung der Melamin-/Formaldehyd-Schaumstoffe enthaltend Mikrohohlkugeln nach einem der Ansprüche 1 bis 5 als Polsterung und zum Wärme-, Kälteund Schallschutz.

## Claims

1. A melamine-formaldehyde foam comprising hollow microspheres, wherein said hollow microspheres are embedded into the open-cell pores of the foam structure and have a median particle diameter (D₅₀, volume averaged, Malvern, Fraunhofer diffraction) in the range from 260 µm to 490 µm.

2. The melamine-formaldehyde foam according to claim 1 wherein the hollow microsphere content is in the range from 0.1% to 60% by weight, wherein the %ages by weight are based on the total weight of hollow microspheres and melamine-formaldehyde precondensate used for foam production.

3. The melamine-formaldehyde foam according to either of claims 1 and 2 wherein the hollow microsphere walls consist of a polymer or of an inorganic material.

4. The melamine-formaldehyde foam according to claims 1 to 3 wherein the hollow microsphere walls consist of glass.

5. The melamine-formaldehyde foam according to claims 1 to 4 wherein the hollow microsphere interiors are at least partly filled with an active or effect substance.

6. The process for producing a melamine-formaldehyde foam comprising hollow microspheres according to claims 1 to 5 wherein the consecutive process steps a) and b) are carried out:
a) heating to foam up and crosslink a mixture comprising a melamine-formaldehyde precondensate having a molar ratio of melamine:formaldehyde in the range from 1:1.3 to 1:5, hollow microspheres having a median particle diameter (D₅₀, volume averaged, Malvern, Fraunhofer diffraction) in the range from 260 µm to 490 µm, curatives, dispersants and blowing agents, and
b) drying the foam obtained in process step a).

7. The use of the melamine-formaldehyde foam comprising hollow microspheres according to any one of claims 1 to 5 as cushioning and to protect against the heat, the cold and sound.

## Revendications

1. Mousse de mélamine/formaldéhyde contenant des microbilles creuses, **caractérisée en ce que** les microbilles creuses sont incorporées dans les pores à cellule ouverte de la structure en mousse et présentent un diamètre moyen de particule (D₅₀, moyenne en volume, Malvern, diffraction de Fraunhofer) dans la plage de 260 µm à 490 µm.

2. Mousse de mélamine/formaldéhyde selon la revendication 1, **caractérisée en ce que** la teneur en microbilles creuses est de 0,1 à 60% en poids, le % en poids se rapportant au poids total du précondensat de mélamine/formaldéhyde utilisé pour la fabrication de la mousse et des microbilles creuses.

3. Mousses de mélamine/formaldéhyde selon les revendications 1 à 2, **caractérisées en ce que** les parois des microbilles creuses sont constituées par un polymère ou un matériau inorganique.

4. Mousses de mélamine/formaldéhyde selon les revendications 1 à 3, **caractérisées en ce que** les parois des microbilles creuses sont en verre.

5. Mousses de mélamine/formaldéhyde selon les revendications 1 à 4, **caractérisées en ce que** les espaces internes des microbilles creuses sont au moins partiellement remplis d'une substance active ou d'une substance conférant un effet.

6. Procédé pour la fabrication de mousses de mélamine/formaldéhyde contenant des microbilles creuses selon les revendications 1 à 5, **caractérisé en ce que** les étapes de procédé a) et b) successives sont réalisées :
a) chauffage avec moussage et réticulation d'un mélange, contenant un précondensat de mélamine/formaldéhyde, présentant un rapport molaire de mélamine:formaldéhyde dans la plage de 1:1,3 à 1:5, des microbilles creuses présentant un diamètre moyen de particule (D₅₀, moyenne en volume, Malvern, diffraction de Fraunhofer) dans la plage de 260 µm à 490 µm, un durcisseur, un dispersant et un agent gonflant, et
b) séchage de la mousse obtenue dans l'étape de procédé a).

7. Utilisation des mousses de mélamine/formaldéhyde contenant des microbilles creuses selon l'une quelconque des revendications 1 à 5 comme rembourrage et pour la protection contre la chaleur, le froid et le bruit.
